# EUROPEAN PATENT APPLICATION

(11) **EP 0 753 394 A2**
(43) Date of publication of application: **15.01.1997**
(21) Application number: 96111184.6
(22) Date of filing: 11.07.1996
(51) Int. Cl.: B29C 70/52, E04G 1/00

(54) **Method for the continuous production of sandwich boards for scaffolding and formworks and sandwich boards for scaffolding and formworks thus produced**

(30) Priority: 14.07.1995 IT UD950140
(71) Applicant: PILOSIO SpA, 33010 Feletto Umberto (UD) (IT)
(72) Inventor: Pillosio, Roberto, 33100 Udine (IT); Sairu, Claudio, 33100 Udine (IT); Pillosio, Mirta, 33100 Udine (IT); Cianciotta, Massimiliano, 33010 Colugna (UD) (IT)
(74) Representative: Petraz, Gilberto Luigi

(57) **Abstract**

Method for the continuous production of sandwich boards for scaffolding and/or formworks obtained by the pultrusion system, the boards comprising an inner filling body (11) and at least one outer reinforcement layer (12) to cover at least the longitudinal faces of the board, the outer reinforcement layer (12) comprising continuous fibre material in continuous thread form and/or continuous weave form and/or continuous mat form, the continuous material being impregnated with resin and made to travel under traction inside a formation and polymerization mold (13) and subsequently cut to size, the inner filling bodies (11) being fed to the formation and polymerization mold (13) without substantial discontinuity in the form of geometrically finished elements in a substantially central position with respect to the continuous fibre materials which constitute the multi-layered outer reinforcement part (12).

Sandwich board for scaffolding and formworks obtained by the pultrusion method and comprising an inner filling body (11) associated with a multi-layered covering part with the function of reinforcing and protecting, the multi-layered covering part (12) comprising a first inner layer (12a) made of a single-thread MAT material in fibreglass reinforced with resin, a second intermediate layer (12b) made of a multi-layered mat attached to a fibreglass base and an outer layer (12c) made of a veil of non-woven material.

## Description

This invention concerns a method for the continuous production of sandwich boards for scaffolding and formworks, and also the sandwich boards for scaffolding and formworks thus produced, as set forth in the main claim.

The method according to the invention is applied in the field of the production of components for the building trade using the pultrusion technique, to make boards composed of an internal filling body and by one or more external reinforcing layers.

In the state of the art there are methods to make multilayer box-type sections of a rectangular shape by means of pultrusion

The pultrusion method consists of impregnating a continuous reinforcing material with a resin and feeding this material in traction through a mold where the polymerization of the resin takes place.

The continuous reinforcing material is generally made of glass fibre, carbon fibres, aramidic fibres or other fibres of vegetable, mineral or organic origin, and may be in thread form and/or weave form, or mat form, or any other form suitable for the purpose.

Molds known to the state of the art have an axial passage channel inside of which there is a fixed metallic longitudinal core around which the continuous reinforcing material is made to pass.

At the outlet of the mold a box-like covering structure is obtained, which is closed at the sides and open at the ends, and which is cut transversely to the desired length as it comes out from the mold.

Inside this box-type structure expanded polyurethane resin is later injected to comprise the internal filling body of the board.

The production method is carried out in several phases, it is long and laborious and has very high production costs.

Moreover the productivity of plants known to the state of the art is very low.

The inner face of the box-like structure thus obtained has a very smooth surface because it is made by the reinforcing material sliding along the fixed longitudinal metallic core of the mold.

This characteristic means that the expanded polyurethane resin injected into the inside does not have a good grip on the inner surface of the reinforcing material with the result that the board does not always have the desired characteristics.

Another problem with this method is that if inside the box-like structure a high density of filling material is desired, deformations and swelling may form in the longitudinal faces of the box-like structure which make the final product unusable.

So as to be able to inject the high-density polyurethane inside the box-like structure, it is necessary to position the box-like structure inside a press, or another mold, until the polyurethane is completely hard, which complicates even further the production method and increases the costs of both the plant and of production.

Moreover, with this method it is only possible to make sandwich boards with the internal filling body made by means of injection, as it is not possible to use hard pre-shaped filling bodies of other material such as balsa, wood, etc..

The present applicants have designed, tested and embodied this invention to overcome the shortcomings of the state of the art and to achieve further advantages.

This invention is set forth and characterised in the main claim, while the dependent claims describe variants of the idea of the main embodiment.

The purpose of the invention is to provide a method for the continuous production of sandwich boards which is simple, quick, cheap and will guarantee high productivity with a consequent decrease in production time and production costs of the boards.

The invention is principally intended to provide sandwich boards to use in the building trade, to make boards for scaffolding and boards for formworks, but the use of the invention is not limited to this field of application.

The method according to the invention makes it possible to produce sandwich boards where the internal filling body can be made of expanded polyurethane resin, of balsa, of wood, of honey-comb elements or other hard material, pre-shaped and advantageously both highly resistent and light.

The preferred material for filling the board is MDD (methanediphenyldiisocyanate) polyurethane or polyurethane of the type made of a mixture of polyhydric alcohol with aliphatic tertamines and surface-active agents.

The sandwich boards obtained by means of the invention have better adhesion between the internal filling body and the external layer of protection and reinforcement.

The external layer of reinforcement can be made of glass fibres, carbon fibres, aramidic fibres or other similar fibres of vegetable, mineral or organic origin.

The density and type of material which make up the internal filling body, the type of material which makes up the external layer(s) of protection and reinforcement, and the number and thickness of the various layers, are a function of the resistence desired and of the final use to which the boards thus made will be put.

In one of the preferred embodiments of the invention, the first external reinforcement layer is made of a single-thread material (MAT) in fibreglass which is incorporated into the resin, with a weight between 300 and 600 g/sq.m, taking into account both the glass component and the bonding agent.

In this preferred embodiment of the invention, there is a second intermediate layer of covering made of a multi-layered mat attached to a single-thread material (MAT) in glass fibre, the whole of which is incorporated into the resin, with a total weight of between 800 and 1200 g/sq.m, and a third covering layer on the outside made up of a gauze of non-woven material, preferably of polyester, with a weight of between 35 and 50 g/sq.m., which is also incorporated into the resin.

The resin used is the polyester type, containing from 15 to 30% CaCO³.

The main function of the third, outer layer is to protect against atmospheric agents and the light.

According to the invention, the total thickness of the multi-layered covering and the relative resin is between 1.5mm and 3mm.

In the method according to the invention, at least the first external reinforcement layer and/or the third external protection layer have their edges superimposed, so as to completely cover the inner filling body and thus prevent infiltrations and improve the mechanical characteristics of the board obtained.

The method according to the invention includes the pultrusion of the layers of continuous material which make up the external reinforcement layer, suitably impregnated in advance with resin. The material is guided and arranged to cover completely, in an axial direction, the hard inner filling body whose dimensions are finished when it is put in line.

The inner filling body is arranged in the mold in the dimensions desired in a station which is separate from the covering station, or in line with it, and fed substantially continuously to the machine which carries out the covering.

According to a variant, the sections which form the inner filling body, before they are covered, are sanded on the surface, at least on their wide faces, so as to obtain a better surface for gripping the external protection and reinforcement layers.

According to the type of application, the inner filling bodies, preferably in polyurethane, may be molded in the finished dimensions, or sectioned from a block of mutiple dimensions obtained from the mold.

When the boards are to be used as walking boards for scaffolding, the width of the inner filling body is from 55 to 75mm, whereas when the boards are to be used for formworks the width is normally between 15 and 30mm.

The density of the polyurethane used for the inner filling body is greater when the boards are for formworks, as these boards are thinner and have to sustain much greater loads, at least 6000 kg/sq.m; this density may reach a value of between 160 and 250 kg/cu.m.

In the case of walking boards, because of the greater thickness and the lower loads which have to be borne (about 300 kg/sq.m), it is possible to use much lower densities of polyurethane, for example between 40 and 55 kg/cu.m.

In the method according to the invention, at least part of the resin may be applied to the continuous material in fibre which constitutes the outer reinforcement layer of the board, before the board makes, or after the board has made contact with the inner filling bodies.

In a first solution, each layer is impregnated individually with resin and then sent for pultrusion.

According to a variant, the layers are first put together and then impregnated in a single pass with the resin.

According to another variant, the two innermost layers are put together and then impregnated with resin while the third layer is made to adhere to the preceding layers during the pultrusion stage.

According to a variant, at least part of the resin is applied to the inner filling body before the continuous material in fibre comes into contact with the filling body.

In the method according to the invention, the resin may be of the type which hardens under heat, in which case the mold for forming and polymerizing is advantageously heated so as to speed up the polymerization of the resin.

According to a variant, there are some heating elements upstream or downstream of the formation and polymerization mold where the pultrusion is carried out.

According to a variant, catalysing agents are used to prime the polymerization of the resin inside the mold.

It is also possible to use resins which are sensitive to infrared, UV, or other factors which accelerate and stabilize polymerization.

According to a variant, the method according to the invention comprises a covering stage, of at least one longitudinal wide face of the board, with non-slip elements, such as granular or other elements, particularly in the case where the boards are to be used as walking boards for scaffolding.

The method according to the invention comprises a sealing stage of at least one end of the board, possibly associated with a customizing stage depending on the type of use the board will have.

According to a variant, sealing is done by applying plate or plug elements, advantageously by means of the application of resin or glue.

The customizing may include, at least in the case of walking boards, the application at the ends of the boards of metallic box-type structures with, at the outer end, hooks or other gripping means.

Customizing may also include through holes on the longitudinal wide faces of the board into which hard cylinders may be inserted so as to allow the passage of tie-rods or other, after the surfaces of the holes and cylinders have been sealed.

In a first form of the invention, the feed unit which feeds the inner filling bodies is positioned laterally to the axis of feed of the outer reinforcement layer.

In this case, so as to guarantee greater continuity in the plant, there may be two loading units arranged on opposite sides of the axis of feed of the plant, so that while one is feeding, the other is loading.

According to another form of the invention, the feed unit which feeds the inner filling bodies is arranged in axis, or substantially in axis, with the axis of feed of the outer reinforcement layer.

The impregnation unit for the outer reinforcement layer, whether the layers are impregnated singly or together, may include immersion baths filled with liquid resin, or means with impregnation rolls over which the continuous reinforcement material is made to pass.

According to other embodiments of the invention, the continuous reinforcement material is impregnated by having the resin poured over it, and then scraped, or sprayed or other suitable means for the purpose.

The attached figures are given as a non-restrictive example and show some preferred embodiments of the invention as follows:
- Fig. 1: shows a transverse section of a sandwich board according to the invention;
- Fig. 2: shows a diagram of a plant for the production of boards according to the invention;
- Fig. 2a: is a partial view of a variant of the plant in Fig. 2;
- Fig. 3: shows a diagram with a view from above a variant of the feed unit to feed the inner filling body;
- Fig. 4: shows a variant of Fig. 1;
- Fig. 5: shows a diagram of a board with customized elements on the end associated with attachment means;
- Fig. 6: shows the sequence of the method according to the invention.

The reference number 10 generally indicates a sandwich board for scaffolding or formworks obtained by the method according to the invention.

The board 10 comprises an inner filling body 11 and an outer multi-layered reinforcement part 12 which covers at least the longitudinal faces.

The inner filling body 11 is advantageously made in expanded polyurethane but other expanded material (balsa, particle boards, boards obtained from the recycling of urban refuse, honey comb boards or other) can also be used.

The multi-layered outer covering part 12 may be made of glass fibres, carbon fibres, aramidic fibres, or similar fibres of vegetable, mineral or organic origin.

The multi-layered outer covering part 12 is fed in continuous thread form, and/or continuous weave form, and/or continuous mat form.

In the method according to the invention, the multi-layered outer covering part 12 and/or the inner filling body 11 are impregnated with resin before they cooperate with the formation and polymerization mold 13 where the resin is polymerized.

The resin may be advantageously of the type which hardens with heat, in which case the formation and polymerization mold 13 is advantageously heated.

According to a variant not illustrated here, so as to accelerate and optimize the polymerization of the resin,there are heating means upstream or downstream of the formation and polymerization mold 13.

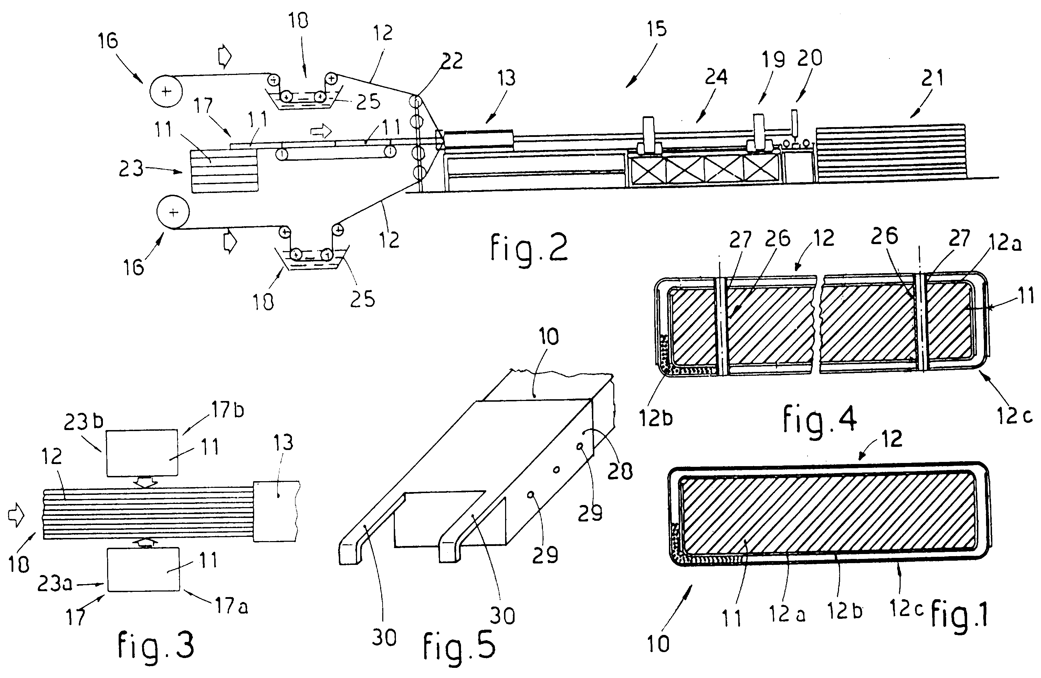

In the case of Fig.1, the board 10 is made of an inner filling body 11, a first inner reinforcement layer 12a made of glass fibre weave, a second intermediate reinforcement layer 12b made of a mat of glass fibre threads and a third outer protection layer 12c made of a veil of non-woven material.

In this case, both the first inner reinforcement layer 12a and the third outer protection layer 12c have their edges superimposed.

The third outer layer 12c substantially has the function of protecting the board from atmospheric agents and the light.

If the boards are to be used as walking boards, the outer surface of the third outer layer is advantageously made of nonslip materail.

In the method according to the invention, pultrusion is carried out by means of a mold 13. The continuous material which constitutes the multi-layered outer reinforcement part 12 undergoes pultrusion while at the same time the inner filling body 11 is continuously inserted, in the form of a finished hard element, inside the continuous material which constitutes the outer reinforcement layer 12.

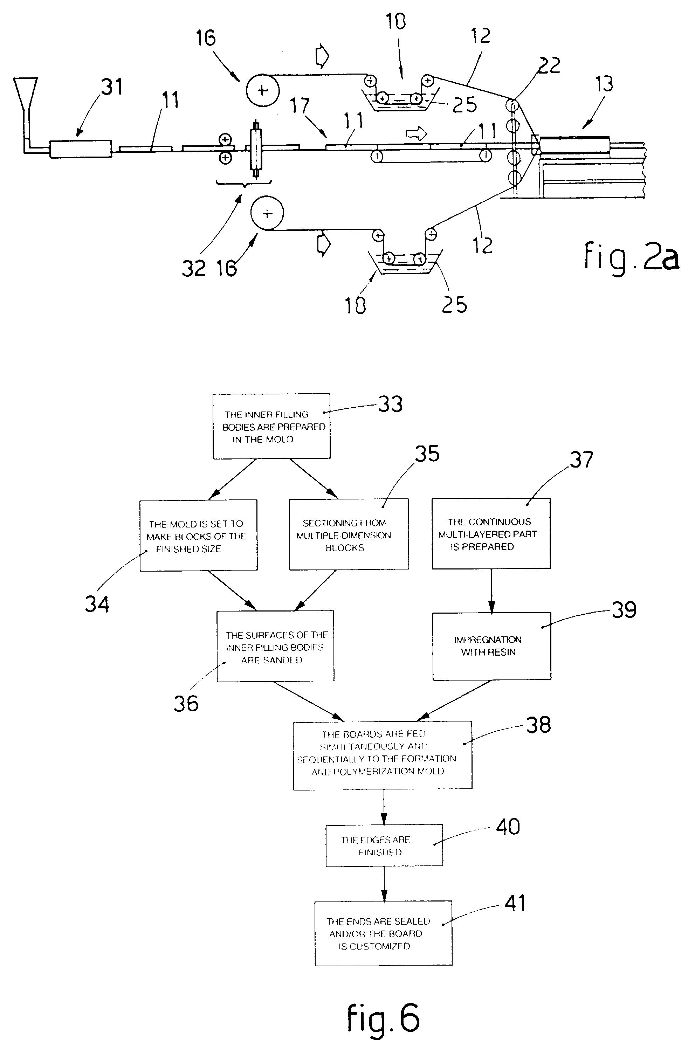

The inner filling bodies 11 are produced in the mold upstream (phase 33; fig. 6), either directly in the finished dimensions (34), or sectioned from multiple-dimensioned blocks (35), and fed in axial alignment, continuously and with substantial continuity.

In a first embodiment of the invention, the preparation phase of the inner filling body 11 is separate from the pultrusion line.

In this embodiment (Fig.2), the inner filling bodies (11) are arranged in their finished state, for example in a stack 23, and then fed sequentially and continuously to the mold 13 where the covering is carried out.

In the variant shown in Fig. 2a, the inner filling bodies 11 are arranged in the mold 31 on the same line as the formation and polymerization mold 13, and if necessary they undergo a superficial sanding (36), which is carried out in line in the appropriate station 32 and they are then sent in sequence and continuously to the covering station (38).

The sanding of their surfaces has the purpose of increasing the grip of the inner filling body 11 on the outer reinforcement layer 12.

In this case, upstream of the mold 13, the continuous material which constitutes the multi-layered outer reinforcement part 12 is arranged (37) and then impregnated with part of the resin (39) which polymerizes inside the mold 13, and this causes a close contact and a reciprocal resistent attachment between the inner filling body 11 and the outer reinforcement layer 12.

According to a variant not shown here, the impregnation with at least part of the resin takes place after the continuous material which constitutes the outer reinforcement layer 12 has come into contact with the inner filling bodies 11.

According to another variant, at least part of the resin is applied directly onto the inner filling bodies 11.

The plant 15 which carries out the method according to the invention comprises a feed unit 16 for the continuous material which constitutes the multi-layered outer reinforcement part 12, and a feed unit 17 for the inner filling bodies 11.

There is also an impregnation station 18 with resin, in this case comprising a bath 25 in which the multi-layered reinforcement part is immersed before being sent, together with the relative filling body 11, by means of the deflector means 22, into the formation and polymerization mold 13.

The enclosed figures illustrate how impregnation with the resin takes place when the multi-layered reinforcement part 12, comprising three layers 12a, 12b, and 12c, previously put together, is already formed.

According to a variant not shown here, each single layer 12a, 12b, and 12c is impregnated singly with resin and then sent inside the formation and polymerizatiion mold 13 where they are coupled with the inner filling body 11.

Downstream from the mold 13 is a drawing unit 19 which cooperates with a shearing unit 20 which shears (40) the continuous multi-layered part 12 and finishes the edges.

The board thus obtained is then sent to a collection and stacking unit 21.

In the case of Fig. 2, the feed unit 17 for the inner filling bodies 11 is positioned in axis with the direction of feed of the continuous material which constitutes the outer reinforcement layer 12, which in this case passes both above and below the feed unit 17.

In the variant in Fig. 3, the feed unit 17 has two feed stations, 17a and 17b, arranged on both sides of the direction of feed of the continuous material which constitutes the outer reinforcement layer 12.

Each station 17a and 17b has a respective stack 23a and 23b to guarantee greater continuity to the plant 15 and to facilitate the operations of supplying the inner filling bodies 11.

The plant 15 illustrated in Fig. 2 has a covering station 24 in line, with at least one wide longitudinal face of the board 10, with nonslip elements.

The covering station 24 can, for example, carry out the surface abrasion of a wide longitudinal face of the board 10, the application of a layer of liquid resin by means of pouring or spraying, and the application of granular elements, such as sand, to make the surface rough.

According to another variant, downstream of the transverse shearing unit 20, the plant 15 has a sealing unit, not illustrated here, to seal at least one end of the board 10, to prevent damage to the inner filling body 11.

The plant 15 can have, in association with the sealing station, or downstream of it, a station where customizing (41) is carried out on the ends of the board 10.

In this customizing station metallic box-type structures 28 may be applied with integral anchoring means 30, possibly by including attachment seatings.

According to other variants, the anchoring means 30 are applied directly onto the board 10, for example by means of screws, by gluing, jointing, or by means of pressure under heat.

Fig. 4 shows a customized board 10 with transverse through holes 26 into which cylinders 27 have been inserted, made of plastic or metal, with which the tie-rods can cooperate during assembly.

Fig. 5 shows a customized board 10 with box-like elements at the end 28, carrying anchoring means 30, attached to the board 10 by means of a plurality of rivets 29.

On the board 10 it is possible to apply metal reinforcement C-sections, which cooperate with the narrow longitudinal faces of the board 10.

## Claims

1. Method for the continuous production of sandwich boards for scaffolding and/or formworks according to the pultrusion system, the boards comprising an inner filling body (11) and at least one layer of outer reinforcement (12) to cover at least the longitudinal faces of the boards, the outer reinforcement layer (12) being made of a continuous material in fibre in the form of continuous thread and/or continuous weave and/or continuous mat, the continuous material being impregnated with resin and made to pass under traction inside a formation and polymerization mold (13) and subsequently cut to measure, **the method being characterised in that** the inner filling bodies (11) are fed to the formation and polymerization mold (13) without substantial discontinuity in the form of geometrically finished elements in a position substantially central with respect to the continuous materials in fibre which constitute the multi-layered outer reinforcement part (12).

2. Method as in claim 1, **in which** the application of the multi-layered outer reinforcement part (12) includes the application of a first inner layer (12a), a second intermediate layer (12b) and at least a third outer layer (12c).

3. Method as in claim 2, **in which** at least the outer layer (12c) has the edges superimposed.

4. Method as in any of the claims hereinbefore, **in which** the single layers (12a, 12b, 12c) which make up the multi-layered reinforcement part (12) are impregnated individually with resin before being sent to the formation and polymerization mold (13).

5. Method as in any of the claims 1 to 3, **in which** the single layers (12a, 12b, 12c) which make up the multi-layered reinforcement part (12) are first put together and then impregnated together with the resin before being sent to the formation and polymerization mold (13).

6. Method as in any of the claims from 1 to 3, **in which** at least one of the layers (12a, 12b, 12c) is put, upstream and/or inside the formation and polymerization mold (13), onto a surface which is already covered with resin.

7. Method as in any of the claims hereinbefore, **in which** before being sent to the formation and polymerization mold (13), the inner filling body (11) undergoes a stage (36) of sanding on the surface of at least its longitudinal faces.

8. Method as in any of the claims from 1 to 7, **in which** the inner filling bodies (11) are obtained (33,34) from the mold (31) in their finished dimensions.

9. Method as in any of the claims from 1 to 7, **in which** the inner filling bodies (11) are obtained by sectioning (35) them from multiple-dimension blocks obtained from the mold (31).

10. Method as in any of the claims from 1 to 9, **in which** the mold (31) is arranged out of line with the formation and polymerization mold (13) (Fig. 2).

11. Method as in any of the claims from 1 to 9, **in which** the mold (31) is arranged in line with the formation and polymerization mold (13) (Fig.2a).

12. Method as in any of the claims hereinbefore, **in which** the formation and polymerization mold (13) is heated.

13. Method as in any of the claims hereinbefore, **in which** downstream from the formation and polymerization mold (13) there is a stage to heat the board (10) as it comes out of the mold (13).

14. Method as in any of the claims hereinbefore, **in which** upstream of the formation and polymerization mold (13) there is a stage to pre-heat the inner filling body (11).

15. Method as in any of the claims hereinbefore, **in which** the resin contains at least 15% CaCO³.

16. Method as in any of the claims from 1 to 15, **in which** the inner filling bodies (11) are fed substantially in axis with the feed of the continuous fibre material.

17. Method as in any of the claims from 1 to 15, **in which** the inner filling bodies (11) are fed by lateral insertion and then subsequently by longitudinal feed.

18. Method as in any of the claims hereinbefore, **in which** in the formation and polymerization mold (13) compression is exerted on the continuous material in transit.

19. Method as in any of the claims hereinbefore, **in which** downstream of the formation and polymerization mold (13), at east one longitudinal wide face of the board (10) is covered with nonslip means.

20. Method as in any of the claims hereinbefore, **in which,** downstream of the formation and polymerization mold (13), at least one end of the board (10) is sealed.

21. Method as in any of the claims hereinbefore, **in which** the sealing of the ends is associated with a stage (41) of customization of the ends.

22. Method as in any of the claims hereinbefore, **in which** there is a plurality of through holes (26) in the wide faces of the board (10).

23. Method as in claim 22, **in that** hard cylinders (27) are inserted into the transverse holes (27), and the edges of the holes (26) and the cylinders (27) are sealed.

24. Sandwich board for scaffolding and formworks obtained by means of the pultrusion method and comprising an inner filling body (11) associated with a multi-layered covering with the function of reinforcing and protecting, the board being **characterised in that** the multi-layered covering (12) comprises a first inner layer (12a) of a single-thread MAT material in fibreglass reinforced by resin, a second intermediate layer (12b) of a multi-layered mat on a fibreglass base and an outer layer (12c) of non-woven material.

25. Sandwich board as in claim 24, **in which** the first inner reinforcement layer (12a) is made of a single-thread MAT material incorporated into the resin with a weight between 300 and 600 /sq.m.

26. Sandwich board as in claim 24, **in which** the second intermediate layer (12b) is made of a multi-layered mat attached to a single-thread fibreglass MAT material, with a total weight of between 800 and 1200 g/sq.m.

27. Sandwich board as in claim 24, **in which** the third outer layer (12c) is made of a veil of non-woven material in polyester with a weight of between 35 and 50 g/sq.m.

28. Sandwich board as in any of the claims from 24 to 27, **in which** the total thickness of the multi-layered part (12) is between 1.5 mm and 3 mm.

29. Sandwich board as in claim 24, **in which** the filling body (11) is in expanded polyurethane.

30. Sandwich board as in claim 29, **in which** the polyurethane is the MDD type.

31. Sandwich board as in claim 29, **in which** the polyurethane is of the type made of a mixture based on polyhydric alcohol with aliphatic tertamines and surface-active agents.

32. Sandwich board as in claim 24, **in which** the filling body (11) is of balsa.

33. Sandwich board as in claim 24, **in which** the filling body (11) is in wood.

34. Sandwich board as in claim 24, **in which** the filling body (11) has a honey comb structure.

35. Sandwich board as in any of claims 24 to 34, **in which** if the board is to be used as a walking board for scaffolding, the inner filling body (11) has a density of between 40 and 55 kg/cu. m.

36. Sandwich board as in any of the claims 24 to 34, **in which**, if the board is to be used as a board for formwork, the inner filling body (11) has a density between 160 and 250 kg/cu.m.
